(19) Europäisches Patentamt / European Patent Office / Office européen des brevets

(11) **EP 3 893 489 B1**

(12) **EUROPEAN PATENT SPECIFICATION**

(45) Date of publication and mention
of the grant of the patent:
**06.05.2026 Bulletin 2026/19**

(21) Application number: **19904232.6**

(22) Date of filing: **26.12.2019**

(51) International Patent Classification (IPC):
*H04N 23/71* (2023.01)   *H04N 23/72* (2023.01)
*H04N 5/77* (2006.01)   *H04N 5/262* (2006.01)
*G06T 1/00* (2006.01)

(52) Cooperative Patent Classification (CPC):
**H04N 5/772; G06T 1/0007; H04N 5/2628;
H04N 5/77; H04N 23/71; H04N 23/72**

(86) International application number:
**PCT/CN2019/128768**

(87) International publication number:
**WO 2020/135604 (02.07.2020 Gazette 2020/27)**

(54) **IMAGE PROCESSING METHOD, CONTROLLER, IMAGE ACQUISITION APPARATUS,
UNMANNED AERIAL VEHICLE AND READABLE STORAGE MEDIUM**

BILDVERARBEITUNGSVERFAHREN, STEUERUNG, BILDERFASSUNGSVORRICHTUNG,
UNBEMANNTES LUFTFAHRZEUGE UND LESBARES SPEICHERMEDIUM

PROCÉDÉ DE TRAITEMENT D'IMAGE, CONTROLLEUR, APPAREIL D'ACQUISITION D'IMAGE,
VÉHICULE AÉRIEN SANS PILOTE ET SUPPORT DE STOCKAGE LISIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2018 CN 201811600976**

(43) Date of publication of application:
**13.10.2021 Bulletin 2021/41**

(73) Proprietor: **Autel Robotics Co., Ltd.
Shenzhen, Guangdong 518055 (CN)**

(72) Inventor: **LI, Zhaozao
Shenzhen, Guangdong 518055 (CN)**

(74) Representative: **Gulde & Partner
Patent- und Rechtsanwaltskanzlei mbB
Berliner Freiheit 2
10785 Berlin (DE)**

(56) References cited:
EP-A1- 2 627 074          CN-A- 101 399 924
CN-A- 105 915 811       CN-A- 108 717 208
CN-A- 109 040 840       CN-A- 109 074 633
CN-A- 109 714 531       JP-A- 2005 167 924
US-A1- 2011 157 405    US-A1- 2013 209 056
US-A1- 2015 364 158    US-A1- 2021 211 607

## Description

### Cross Reference

The present application is a continuation of the International Application No. PCT/CN2019/128768, filed on December 24, 2019, which claims priority of Chinese patent No. 2018116009767, filed on December 26, 2018.

## BACKGROUND

### Technical Field

Embodiments of the present invention relate to the field of unmanned aerial vehicles (UAV) technologies, and in particular, to an image processing method, apparatus and UAV.

### Related Art

With the development of UAV technologies, a UAV is widely used in aerial photography. The UAV takes an image of a target area by using a camera apparatus disposed on the UAV and transmits the image to an electronic device on the ground for viewing by a user. In order to satisfy various application requirements, the image taken by the camera apparatus is usually split into two paths. One of the paths is processed into a video file and the other of the paths is processed into a picture file, so that the user can view the picture or the video of the target area on the electronic device.

In a current processing method, a controller converts an original image signal obtained by the camera apparatus to a digital image signal, performs image processing on the digital image signal and then splits a processed image into two paths. One of the paths is processed into a video file and the other of the paths is processed into a picture file.

During implementation of the present invention, it is found that there are at least the following problems in the related art: good image quality is preferentially required when the controller performs the image processing on the digital image signal. Otherwise, image quality of an obtained video file cannot be guaranteed.

US 20150364158 A1 discloses a method includes receiving a plurality of image frames corresponding to a video stream, a first image frame having a first resolution and a second image frame having a second resolution that is lower than the first resolution, detecting a trigger by analyzing the second image frame, and designating the first image frame as an action frame based on the trigger.

EP 2627074 A1 discloses an image capture method and image capture system, with the aid of separating data paths for generating preview frames, for generating video frames, and for generating encoded camera frames of an image fetching system in a concurrent and mutually-independent manner, the image fetching system is free from introducing unnecessary shutter lags.

CN 101399924 A discloses an automatic exposure method based on a brightness column diagram including dividing an input image into N*N image blocks, calculating the average imaging brightness, dividing the bright column diagram into three areas; for the N*N average bright values, judging whether each average brightness value falls in each sub-area of the underexposure area or the overexposure area, and calculating the overexposure value.

CN 109040840 A discloses an image transmission method comprising getting the original image, converting the original image into a first image, the first image being an image conforming to an audio and video interface format, converting the first image into a second image, the second image being an image conforming to an image receiving end interface format, and encoding the second image to obtain an encoded image.

US 20130209056 A1 discloses a digital photographing apparatus including a central processing unit/digital signal processor, an analog signal processor, a moving image resizing unit, a still image correcting unit, and a photographing unit, where the analog signal processor performs analog-to-digital conversion, the moving image resizing unit resizes the moving image frame to have resolution of a moving image file, the moving image encoder encodes moving image frames to generate a moving image file, and the still image correcting unit performs processes and generates a still image file.

## SUMMARY

Embodiments of the present invention are intended to provide an image processing method, apparatus and UAV, which can improve image quality of a video while ensuring image quality of a picture.

In a first aspect, an embodiment of the present invention provides an image processing method applicable to a controller of an image acquisition apparatus as defined by the appended set of claims.

In a second aspect, an embodiment of the present invention provides a controller as defined by the appended set of claims.

In a third aspect, an embodiment of the present invention provides an image acquisition apparatus as defined by the appended set of claims.

In a fourth aspect, an embodiment of the present invention provides a UAV as defined by the appended set of claims.

In a fifth aspect, an embodiment of the present invention provides a non-volatile computer-readable storage medium as defined by the appended set of claims.

By means of the image processing method, apparatus and UAV in the embodiments of the present invention, the digital image signal is split into two paths, on which image processing is performed separately to obtain the video file and the picture file. Performing image processing separately on the two paths of the digital image signal can satisfy quality requirements for both the video file and the picture file and ensure image quality of the video file and the picture file.

## BRIEF DESCRIPTION OF THE DRAWINGS

One or more embodiments are exemplarily described with reference to the corresponding figures in the accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.

FIG. 1 is a schematic diagram of an application scenario of an image processing method and apparatus according to an embodiment of the present invention.

FIG. 2 is a schematic diagram of a hardware structure of an embodiment of a UAV according to the present invention.

FIG. 3 is a schematic flowchart of an embodiment of the image processing method according to the present invention.

FIG. 4 is a schematic flowchart of a step of acquiring a video file in an embodiment of the image processing method according to the present invention.

FIG. 5 is a schematic diagram of partitioning an image in an embodiment of the image processing method according to the present invention.

FIG. 6 is a schematic diagram of obtaining a histogram of current image brightness information in an embodiment of the image processing method according to the present invention.

FIG. 7 is a schematic structural diagram of an embodiment of an image processing apparatus according to the present disclosure.

FIG. 8 is a schematic structural diagram of an embodiment of an image processing apparatus according to the present disclosure.

FIG. 9 is a schematic diagram of a hardware structure of a controller in an embodiment of the UAV according to the present invention.

## DETAILED DESCRIPTION

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are merely some embodiments of this application rather than all of the embodiments. All other embodiments obtained by a person of ordinary skill in the art based on the embodiments of this application without creative efforts shall fall within the protection scope of this application.

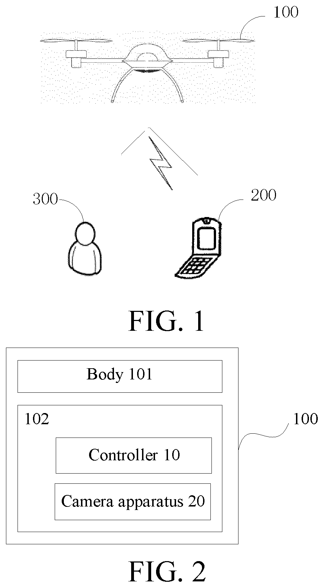

An image processing method, apparatus and UAV provided in embodiments of the present invention are applicable to an application scenario shown in FIG. 1. The application scenario includes a UAV 100, an electronic device 200 and a user 300. The UAV 100 may be a suitable UAV, including a fixed-wing UAV and a rotary-wing UAV, such as a helicopter, a quadrotor and an aircraft including other quantities of rotor wings and/or rotor wing configurations. The UAV 100 may also be other movable objects, such as a manned aircraft, a model airplane, an unmanned airship, an unmanned hot air balloon or the like. The electronic device 200 may be, for example, a remote control, a smart phone, a tablet computer, a personal computer, a laptop computer or the like. The user 300 may interact with the electronic device 200 by using one or more user interaction devices of any suitable type, which may be a mouse, a button, a touch screen or the like. The UAV 100 and the electronic device 200 may establish a communicative connection by using wireless communication modules respectively provided in the UAV and the electronic device, to upload or deliver data/commands.

In some embodiments, referring to FIG. 2 (FIG. 2 shows only part of composition of the UAV 100), the UAV 100 includes a body 101, an arm connected to the body 101 and a power apparatus disposed on the arm. The power apparatuses are configured to provide a push force and a lift force for the UAV 100. The UAV 100 further includes an image acquisition apparatus 102 disposed on the body 101. The image acquisition apparatus 102 includes a camera apparatus 20 and a controller 10. The camera apparatus 20 is, for example, a high-definition camera, a sport camera or the like. The camera apparatus 20 is configured to take an image of a target area, and the controller 10 is configured to process the image to obtain a video file and a picture file. In some embodiments, the image acquisition apparatus 102 further includes a picture transmission module and a picture storage module. The video file may be transmitted to the electronic device 200 by using the picture transmission module, and the picture file may be stored in the picture storage module. The electronic device 200 may obtain the picture file from the picture storage module. The user 300 may view a video or a picture of the target area by using a display screen disposed on the electronic device 200.

When processing the image obtained by the camera apparatus, the controller 10 first converts an original image signal obtained by the camera apparatus to a digital image signal and then splits the digital image signal into two paths. Image processing is separately performed on one path of the digital image signal to obtain a video file and on an other path of the digital image signal to obtain a picture file. Performing image processing separately on the two paths of the digital image signal can satisfy quality requirements for both the video file and the picture file and ensure image quality of the video file and the picture file.

It should be noted that, in addition to being applicable to the UAV 100, the foregoing image acquisition apparatus 102 is further applicable to other devices such as a robot, a television system, a monitoring system and the like to acquire a picture file and a video file.

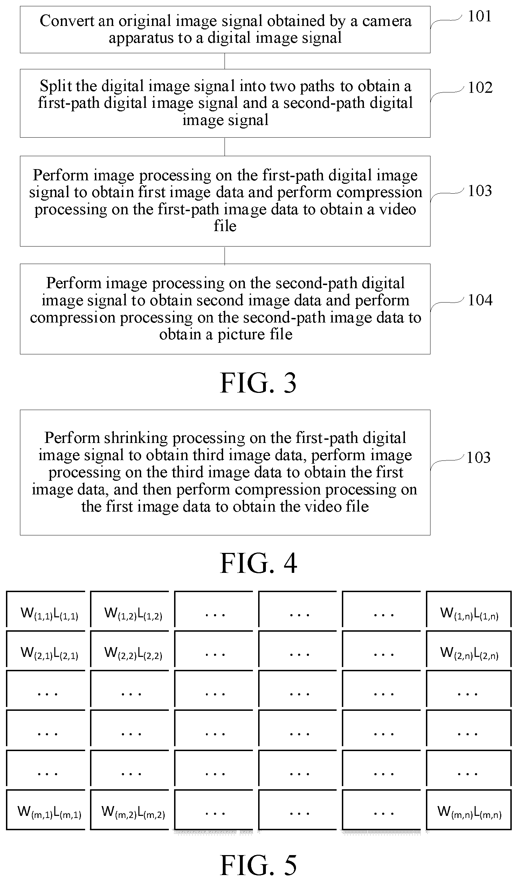

FIG. 3 is a schematic flowchart of an image processing method according to an embodiment of the present invention. The method is applicable to the controller 10 shown in FIG. 2. As shown in FIG. 3, the method includes the following steps:

101: Convert an original image signal obtained by the camera apparatus to a digital image signal.

The signal obtained by the camera apparatus is an original image signal. The original image signal needs to be converted to a digital image signal for subsequent image processing.

102: Split the digital image signal into two paths to obtain a first-path digital image signal and a second-path digital image signal.

103: Perform image processing on the first-path digital image signal to obtain first image data and perform compression processing on the first-path image data to obtain a video file.

104: Perform image processing on the second-path digital image signal to obtain second image data and perform compression processing on the second-path image data to obtain a picture file.

In order to obtain a video file and a picture file, the digital image signal is split into two paths. Image processing (image signal processing (ISP)) is performed on one of the paths to obtain the first image data, and the first image data is compressed to obtain the video file. Image processing is performed on an other path of the digital image signal to obtain the second image data, and the second image data is compressed to obtain the picture file. The image processing for obtaining the picture file is mainly to process intra-frame images without domain processing (such as 3D denoising and the like). The image processing for obtaining the video file processes not only the intra-frame images but also inter-frame images. Performing image processing separately on the two paths of the digital image signal to obtain the video file and the picture file can satisfy quality requirements for both the video file and the picture file and ensure image quality of the video file and the picture file.

In some embodiments, the first image data and the second image data are YUV data. The first image data may be compressed by using encoding methods such as joint photographic experts group (JPEG), motion-join photographic experts group (M-JPEG) or the like, and the second image data may be compressed by using encoding methods such as H265, H264 or the like.

In order to reduce a calculation amount during the processing for acquiring the video file, in some embodiments, before the image processing is performed on the digital image signal to obtain the first image data, the method further includes a step of performing shrinking processing on the digital image signal. As shown in FIG. 4, step 103 is as follows:

103: Perform shrinking processing on the first-path digital image signal to obtain third image data, perform image processing on the third image data to obtain the first image data, and then perform compression processing on the first image data to obtain the video file.

Performing shrinking processing on the digital image signal means reducing a quantity of pixels in an image corresponding to the digital image signal by using image shrinking methods such as equal interval sampling, local mean sampling or the like.

In some other embodiments of the present invention, the image processing method further includes:

performing exposure control based on the foregoing third image data, that is, first obtaining current brightness information based on the third image data, and then setting an exposure parameter of the camera apparatus according to the current brightness information, so that a brightness of an image then taken by the camera apparatus is close to a target brightness. The current brightness information is statistical brightness information based on the third image data, such as an average brightness of the third image data, or is brightness information obtained based on a histogram of the third image data, that is, an overexposed region in the image and a brightness value thereof that are obtained based on the histogram. Obtaining the current brightness information is relatively resource-consuming processing. However, performing the exposure control based on the shrunken third image data can save resources and optimize processing performance. The exposure parameter includes an exposure time, an exposure gain and the like.

The average brightness of the third image data and processing of the histogram are described below by using an example.

Referring to FIG. 5, an image corresponding to the third image data is divided into m×n regions, m representing m rows, and n representing n columns. The average brightness of the third image data may be a general average brightness or a weighted average brightness. First, an average brightness $L_{(i,j)}$ of each small region in FIG. 5 is first obtained, i representing a quantity of rows, i=1,2,......,m, j representing a quantity of columns, and j=1,2,......, n. The average brightness $L_{(i,j)}$ of each small region may be obtained by dividing a sum of brightnesses of all pixels in the small region by a quantity of pixels. The general brightness of the third image data is a sum of average brightnesses of all of the small regions divided by m×n. The weighted average brightness of the third image data is:

$$L = \frac{\sum_{i,j}^{m,n}(W_{(i,j)}L_{(i,j)})}{\sum_{i,j}^{m,n}W_{(i,j)}} \qquad (1),$$

$W_{(i,j)}$ being a weighted brightness value of each small region, i=1,2,......,m, and j=1,2,......,n.

In may be learned from equation (1) that, after the shrinking processing, the quantity of pixels in the image is reduced. In this case, m and n are also reduced compared with those before the shrinking processing. Using the shrunken third image data to obtain the current brightness information can significantly reduce the calculation amount and reduce resource consumption.

In some embodiments, the histogram may be used to determine whether a current image is overexposed or excessively dark based on the average brightness. In other embodiments, the histogram may also be used to determine an exposure status of the current image alone. In some of the embodiments, acquiring the histogram of the third image data includes:

equally dividing the regions in a range from a preset minimum brightness value to a preset maximum brightness value into at least two range intervals;

for each of the range intervals, performing summation on ones of the average brightnesses of the regions that fall within the range interval to obtain a statistical brightness of the range interval; and

drawing the histogram according to the range intervals and the statistical brightnesses corresponding to the range intervals.

For example, the preset minimum brightness value is 0, and the preset maximum brightness value is 255. Assuming that an interval between 0 and 255 is equally divided into K range intervals, an average brightness of each range interval is:

$$H = \begin{cases} \sum_{i,j}^{m,n} L_{(i,j)}, \text{for } 0 \leq L_{(i,j)} < \dfrac{256}{K} \\ \sum_{i,j}^{m,n} L_{(i,j)}, \text{for } \dfrac{256}{K} \leq L_{(i,j)} < \dfrac{256 \times 2}{K} \\ \qquad\qquad \cdots \\ \sum_{i,j}^{m,n} L_{(i,j)}, \text{for } \dfrac{256(K-1)}{K} \leq L_{(i,j)} < 256 \end{cases}$$

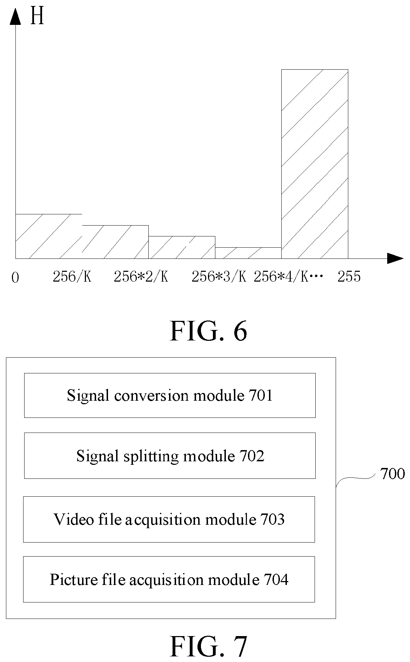

A histogram shown in FIG. 6 may be obtained according to the foregoing equation. Referring to the histogram shown in FIG. 6, by dividing the brightness interval into the segments, whether the image is overexposed or excessively dark may be directly determined from the histogram. It may be learned from FIG. 6 that a brightest region is very prominent compared with other regions. Therefore, the image is overexposed. If the image is overexposed, a small one, of the small regions shown in FIG. 5, located in a brightest region in the histogram may be obtained, so that an overexposed small region in the image and a brightness value corresponding to the small region may be obtained.

Correspondingly, as shown in FIG. 7, an embodiment of the present invention further provides an image processing apparatus applicable to the controller 10 shown in FIG. 2. The image processing apparatus 700 includes:

a signal conversion module 701, configured to convert an original image signal obtained by the camera apparatus to a digital image signal;

a signal splitting module 702, configured to split the digital image signal into two paths to obtain a first-path digital image signal and a second-path digital image signal;

a video file acquisition module 703, configured to perform image processing on the first-path digital image signal to obtain first image data and perform compression processing on the first-path image data to obtain a video file; and

a picture file acquisition module 704, configured to perform image processing on the second-path digital image signal to obtain second image data and perform compression processing on the second-path image data to obtain a picture file.

By means of the embodiments of the present invention, the digital image signal is split into two paths, on which image processing is performed separately to obtain the video file and the picture file. Performing image processing separately on the two paths of the digital image signal can satisfy quality requirements for both the video file and the picture file and ensure image quality of the video file and the picture file.

In some embodiments of the image processing apparatus 700, before the performing of the image processing on the first-path digital image signal to obtain first image data, the video file acquisition module 703 is further configured to: perform shrinking processing on the first-path digital image signal to obtain third image data.

The video file acquisition module 703 is configured to perform image processing on the third image data to obtain the first image data.

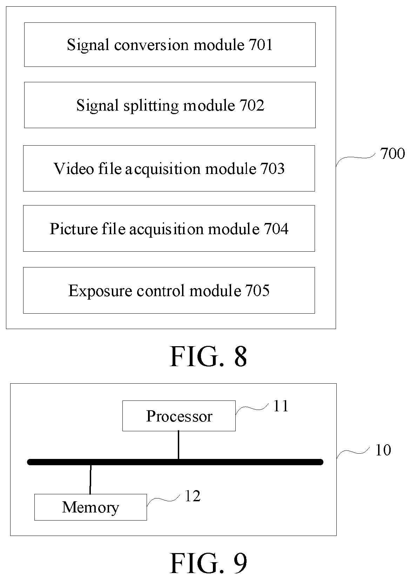

In some embodiments of the image processing apparatus 700, as shown in FIG. 8, the image processing apparatus 700 further includes an exposure control module 705. The exposure control module 705 is configured to:

obtain current brightness information based on the third image data; and

set an exposure parameter of the camera apparatus according to the current brightness information.

In some embodiments of the image processing apparatus 700, the exposure control module 705 is further configured to:
obtain an average brightness of the third image data.

In some embodiments of the image processing apparatus 700, the exposure control module 705 is further configured to:

obtain a histogram of the third image data; and
obtain the current brightness information according to the histogram of the third image data.

In some embodiments of the image processing apparatus 700, the exposure control module 705 is further configured to:

divide an image corresponding to the third image data into m×n regions, and obtain average brightnesses of the regions, m representing a quantity of rows, and n representing a quantity of columns;

equally divide the regions in a range from a preset minimum brightness value to a preset maximum brightness value into at least two range intervals;

for each of the range intervals, perform summation on ones of the average brightnesses of the regions that fall within the range interval to obtain a statistical brightness of the range interval; and

draw the histogram according to the range intervals and the statistical brightnesses corresponding to the range intervals.

It should be noted that the foregoing apparatus may perform the method provided in the embodiments of the present application, and have the corresponding functional modules for performing the method and beneficial effects thereof. For technical details not described in detail in this embodiment, refer to the method provided in the embodiments of the present application.

FIG. 9 is a schematic diagram of a hardware structure of the controller 10. As shown in FIG. 9, the controller 10 includes one or more processors 11 and a memory 12. One processor 11 is used as an example in FIG. 9.

The processor 11 and the memory 12 may be connected through a bus or in other manners and are, for example, connected through a bus in FIG. 9.

As a non-volatile computer readable storage medium, the memory 12 may be configured to store a non-volatile software program, a non-volatile computer executable program, and a module, for example, a program instruction/module corresponding to the image processing method in the embodiments of the present application (for example, the signal conversion module 701, the signal splitting module 702, the video file acquisition module 703 and the picture file acquisition module 704 shown in FIG. 7). The processor 11 performs various functional applications and data processing of the controller by running the non-volatile software program, instructions and module stored in the memory 12, that is, implementing the image processing method in the foregoing method embodiments.

The memory 12 may include a program storage area and a data storage area. The program storage area may store an operating system, an application program required by at least one function and the like. The data storage area may store data created according to use of the controller or the like. In addition, the memory 12 may include a high speed random access memory, and may also include a non-volatile memory, such as at least one magnetic disk storage device, a flash memory, or another volatile solid-state storage device. In some embodiments, the memory 12 optionally includes memories disposed remote to the processor 11, and these remote memories may be connected to the controller 31 through a network. Examples of the network include, but are not limited to, the Internet, an intranet, a local area network, a mobile communication network, and a combination thereof.

The one or more modules are stored in the memory 12. When executed by the one or more processors 11, the one or more modules perform the image processing method according to any of the foregoing method embodiments, for example, perform the method step 101 to the method step 104 in FIG. 3 and the method step 103 in FIG. 4 described above to achieve the functions of the modules 701 to 704 in FIG.7 and the modules 701 to 705 in FIG. 8.

The foregoing product may perform the method provided in the embodiments of the present application, and have the corresponding functional modules for performing the method and beneficial effects thereof. For technical details not described in detail in this embodiment, refer to the method provided in the embodiments of the present application.

An embodiment of the present application provides a non-volatile computer readable storage medium storing computer-executable instructions. The computer-executable instructions are executed by one or more processors, for example, a processor 11 in FIG. 9, so that the one or more processors can perform the image processing method according to any of the foregoing method embodiments, for example, perform the method step 101 to the method step 104 in FIG. 3 and the method step 103 in FIG. 4 described above to achieve the functions of the modules 701 to 704 in FIG.7 and the modules 701 to 705 in FIG. 8.

The foregoing described apparatus embodiments are merely examples. The units described as separate parts may or may not be physically separate, and the parts displayed as units may or may not be physical units, may be located in one position, or may be distributed on a plurality of network units. Some or all of the modules may be selected according to actual needs to implement the objectives of the solutions of the embodiments.

Through the description of the foregoing embodiments, a person skilled in the art may clearly understand that the embodiments may be implemented by software in combination with a universal hardware platform, and may certainly be implemented by hardware. A person of ordinary skill in the art may understand that, all or some of the processes of the method in the foregoing embodiments may be implemented by a computer program instructing relevant hardware. The program may be stored in a computer-readable storage medium. During execution of the program, the processes of the foregoing method embodiments may be included. The foregoing storage medium may be a magnetic disk, an optical disc, a read-only memory (ROM), a random access memory (RAM) or the like.

Finally, it should be noted that the foregoing embodiments are merely used for describing the technical solutions of the present invention, but are not intended to limit the present invention. Under the concept of the present invention, the technical features in the foregoing embodiments or different embodiments may be combined, the steps may be implemented in any sequence, and there may be many other changes in different aspects of the present invention as described above. For brevity, those are not provided in detail. Although the present invention is described in detail with reference to the foregoing embodiments, a person of ordinary skill in the art should understand that they may still make modifications to the technical solutions described in the foregoing embodiments without departing from the scope of the invention as defined by the appended claims.

**Claims**

1. An image processing method, applicable to a controller (10) of an image acquisition apparatus (102), the image acquisition apparatus (102) further comprising a camera apparatus (20) communicatively connected to the controller (10), **characterized in that** the image processing method comprises:

   converting (101) an original image signal obtained by the camera apparatus (20) to a digital image signal;
   splitting (102) the digital image signal into two paths to obtain a first-path digital image signal and a second-path digital image signal;
   performing (103) image processing on the first-path digital image signal to obtain first image data satisfying quality requirements for a video file, wherein the image processing for obtaining the first image data includes an intra-frame image processing and an inter-frame image processing;
   performing (103) compression processing on the first image data to obtain a video file;
   performing (104) image processing on the second-path digital image signal to obtain second image data satisfying quality requirements for a picture file, wherein the image processing for obtaining the second image data includes only an intra-frame image processing; and
   performing (104) compression processing on the second image data to obtain a picture file.

2. The image processing method according to claim 1, **characterized in that** before the performing (103) image processing on the first-path digital image signal to obtain first image data, the method further comprises:

   performing shrinking processing on the first-path digital image signal to obtain third image data; and
   the performing (103) image processing on the first-path digital image signal to obtain first image data comprises:
   performing image processing on the third image data to obtain the first image data.

3. The image processing method according to claim 2, **characterized in that** the method further comprises:

   obtaining current brightness information based on the third image data; and
   setting an exposure parameter of the camera apparatus according to the current brightness information.

4. The image processing method according to claim 3, **characterized in that** the obtaining current brightness information based on the third image data comprises:
   obtaining an average brightness of the third image data.

5. The image processing method according to claim 3 or 4, **characterized in that** the obtaining current brightness information based on the third image data comprises:

   obtaining a histogram of the third image data; and
   obtaining the current brightness information according to the histogram of the third image data.

6. The image processing method according to claim 5, **characterized in that** the obtaining a histogram of the third image data comprises:

   dividing an image corresponding to the third image data into m×n regions, and obtaining average brightnesses of the regions, m representing a quantity of rows, and n representing a quantity of columns;
   equally dividing the regions in a range from a preset minimum brightness value to a preset maximum brightness value into at least two range intervals;
   for each of the range intervals, performing summation on ones of the average brightnesses of the regions that fall within the range interval to obtain a statistical brightness of the range interval; and
   obtaining the histogram of the third image data according to the range intervals and the statistical brightnesses corresponding to the range intervals.

7. A controller (10), **characterized by** comprising:

   at least one processor (11), and

a memory (12), communicatively connected to the at least one processor (11), the memory (12) storing instructions executable by the at least one processor (11), the instructions, when executed by the at least one processor (11), causing the at least one processor (11) to perform the method according to any of claims 1 to 6.

8. An image acquisition apparatus (102), **characterized by** comprising:

a camera apparatus (20), configured to obtain an image of a target area;
the controller (10) according to claim 7, which is communicatively connected to the camera apparatus (20).

9. An unmanned aerial vehicle (UAV), **characterized by** comprising:

a body (101);
an arm, connected to the body (101);
a power apparatus, disposed on the arm; and
the image acquisition apparatus (102) according to claim 8, the image acquisition apparatus (102) being disposed on the body (101).

10. A non-volatile computer-readable storage medium, **characterized in that** the computer-readable storage medium stores computer-executable instructions, the computer-executable instructions, when executed by an unmanned aerial vehicle (UAV), causing the UAV (100) to perform the method according to any of claims 1 to 6.

**Patentansprüche**

1. Bildverarbeitungsverfahren, anwendbar auf eine Steuerung (10) einer Bilderfassungsvorrichtung (102), wobei die Bilderfassungsvorrichtung (102) ferner eine Kameravorrichtung (20) umfasst, die kommunikativ mit der Steuerung (10) verbunden ist, **dadurch gekennzeichnet, dass** das Bildverarbeitungsverfahren Folgendes umfasst:

Umwandeln (101) eines von der Kameravorrichtung (20) erhaltenen Originalbildsignals in ein digitales Bildsignal;
Aufteilen (102) des digitalen Bildsignals in zwei Pfade, um ein digitales Bildsignal des ersten Pfads und ein digitales Bildsignal des zweiten Pfads zu erhalten;
Durchführen (103) einer Bildverarbeitung an dem digitalen Bildsignal des ersten Pfads, um erste Bilddaten zu erhalten, die Qualitätsanforderungen für eine Videodatei erfüllen,
wobei die Bildverarbeitung zum Erhalten der ersten Bilddaten eine Intra-Frame-Bildverarbeitung und eine Inter-Frame-Bildverarbeitung umfasst;
Durchführen (103) einer Komprimierungsverarbeitung an den ersten Bilddaten, um eine Videodatei zu erhalten;
Durchführen (104) einer Bildverarbeitung an dem digitalen Bildsignal des zweiten Pfades, um zweite Bilddaten zu erhalten, die Qualitätsanforderungen für eine Bilddatei erfüllen,
wobei die Bildverarbeitung zum Erhalten der zweiten Bilddaten nur eine Intra-Frame-Bildverarbeitung umfasst; und
Durchführen (104) einer Komprimierungsverarbeitung an den zweiten Bilddaten, um eine Bilddatei zu erhalten.

2. Bildverarbeitungsverfahren nach Anspruch 1, **dadurch gekennzeichnet, dass** vor dem Durchführen (103) einer Bildverarbeitung an dem digitalen Bildsignal des ersten Pfades, um erste Bilddaten zu erhalten, das Verfahren ferner Folgendes umfasst:

Durchführen einer Schrumpfungsverarbeitung an dem digitalen Bildsignal des ersten Pfades, um dritte Bilddaten zu erhalten; und
das Durchführen (103) einer Bildverarbeitung an dem digitalen Bildsignal des ersten Pfades, um erste Bilddaten zu erhalten, Folgendes umfasst:
Durchführen einer Bildverarbeitung an den dritten Bilddaten, um die ersten Bilddaten zu erhalten.

3. Bildverarbeitungsverfahren nach Anspruch 2, **dadurch gekennzeichnet, dass** das Verfahren ferner Folgendes umfasst:

Erhalten aktueller Helligkeitsinformationen auf der Grundlage der dritten Bilddaten; und
Einstellen eines Belichtungsparameters der Kameravorrichtung gemäß den aktuellen Helligkeitsinformationen.

4. Bildverarbeitungsverfahren nach Anspruch 3, **dadurch gekennzeichnet, dass** das Erhalten aktueller Helligkeitsinformationen auf der Grundlage der dritten Bilddaten Folgendes umfasst:
Erhalten einer durchschnittlichen Helligkeit der dritten Bilddaten.

5. Bildverarbeitungsverfahren nach Anspruch 3 oder 4, **dadurch gekennzeichnet, dass** das Erhalten aktueller Helligkeitsinformationen auf der Grundlage der dritten Bilddaten Folgendes umfasst:

    Erhalten eines Histogramms der dritten Bilddaten; und
    Erhalten der aktuellen Helligkeitsinformationen gemäß dem Histogramm der dritten Bilddaten.

6. Bildverarbeitungsverfahren nach Anspruch 5, **dadurch gekennzeichnet, dass** das Erhalten eines Histogramms der dritten Bilddaten Folgendes umfasst:

    Aufteilen eines den dritten Bilddaten entsprechenden Bildes in m×n Bereiche und Erhalten durchschnittlicher Helligkeiten der Bereiche, wobei m eine Anzahl von Zeilen und n eine Anzahl von Spalten darstellt;
    gleichmäßiges Unterteilen der Bereiche in einem Bereich von einem voreingestellten Mindesthelligkeitswert bis zu einem voreingestellten Höchsthelligkeitswert in mindestens zwei Bereichsintervalle;
    für jedes der Bereichsintervalle, Durchführen einer Summierung derjenigen der durchschnittlichen Helligkeiten der Bereiche, die in das Bereichsintervall fallen, um eine statistische Helligkeit des Bereichsintervalls zu erhalten; und
    Erhalten des Histogramms der dritten Bilddaten gemäß den Bereichsintervallen und den statistischen Helligkeiten, die den Bereichsintervallen entsprechen.

7. Steuerung (10), **gekennzeichnet durch**:

    mindestens einen Prozessor (11) und
    einen Speicher (12), der kommunikativ mit dem mindestens einen Prozessor (11) verbunden ist, wobei in dem Speicher (12) Befehle gespeichert sind, die von dem mindestens einen Prozessor (11) ausgeführt werden können, wobei die Befehle, wenn sie von dem mindestens einen Prozessor (11) ausgeführt werden, den mindestens einen Prozessor (11) dazu veranlassen, das Verfahren nach einem der Ansprüche 1 bis 6 durchzuführen.

8. Bilderfassungsvorrichtung (102), **gekennzeichnet durch**:

    eine Kameravorrichtung (20), die dazu konfiguriert ist, ein Bild eines Zielbereichs zu erhalten;
    die Steuerung (10) nach Anspruch 7, die kommunikativ mit der Kameravorrichtung (20) verbunden ist.

9. Unbemanntes Luftfahrzeug (UAV), **gekennzeichnet durch**:

    einen Körper (101);
    einen mit dem Körper (101) verbundenen Arm;
    eine an dem Arm angeordnete Leistungsvorrichtung; und
    die Bilderfassungsvorrichtung (102) nach Anspruch 8, wobei die Bilderfassungsvorrichtung (102) an dem Körper (101) angeordnet ist.

10. Nichtflüchtiges, computerlesbares Speichermedium, **dadurch gekennzeichnet, dass** auf dem computerlesbaren Speichermedium computerausführbare Befehle gespeichert sind, wobei die computerausführbaren Befehle, wenn sie von einem unbemannten Luftfahrzeug (UAV) ausgeführt werden, das UAV (100) dazu veranlassen, das Verfahren nach einem der Ansprüche 1 bis 6 durchzuführen.

**Revendications**

1. Procédé de traitement d'image, applicable à un contrôleur (10) d'un appareil d'acquisition d'image (102), l'appareil d'acquisition d'image (102) comprenant en outre un dispositif de caméra (20) connecté de manière communicante au contrôleur (10), **caractérisé en ce que** le procédé de traitement d'image comprend :

    une conversion (101) d'un signal d'image original obtenu par le dispositif de caméra (20) en un signal d'image numérique ;

une division (102) du signal d'image numérique en deux voies pour obtenir un signal d'image numérique de première voie et un signal d'image numérique de seconde voie ;

une exécution (103) d'un traitement d'image sur le signal d'image numérique de première voie pour obtenir des premières données d'image satisfaisant des exigences de qualité pour un fichier vidéo,

dans lequel le traitement d'image pour obtenir les premières données d'image comporte un traitement d'image intra-image et un traitement d'image inter-image ;

l'exécution (103) d'un traitement de compression sur les premières données d'image pour obtenir un fichier vidéo ;

l'exécution (104) d'un traitement d'image sur le signal d'image numérique de seconde voie pour obtenir des deuxièmes données d'image satisfaisant des exigences de qualité pour un fichier image,

dans lequel le traitement d'image pour obtenir les deuxièmes données d'image comprend uniquement un traitement d'image intra-image ; et

l'exécution (104) d'un traitement de compression sur les deuxièmes données d'image pour obtenir un fichier image.

2. Procédé de traitement d'image selon la revendication 1, **caractérisé en ce que**, avant l'exécution (103) du traitement d'image sur le signal d'image numérique de première voie pour obtenir les premières données d'image, le procédé comprend en outre :

une exécution d'un traitement de réduction sur le signal d'image numérique de première voie pour obtenir des troisièmes données d'image ; et

dans lequel l'exécution (103) du traitement d'image sur le signal d'image numérique de première voie pour obtenir les premières données d'image comprend :

une exécution d'un traitement d'image sur les troisièmes données d'image pour obtenir les premières données d'image.

3. Procédé de traitement d'image selon la revendication 2, **caractérisé en ce que** le procédé comprend en outre :

une obtention d'informations de luminosité courante sur la base des troisièmes données d'image ; et

un réglage d'un paramètre d'exposition du dispositif de caméra en fonction des informations de luminosité courante.

4. Procédé de traitement d'image selon la revendication 3, **caractérisé en ce que** l'obtention des informations de luminosité courante sur la base des troisièmes données d'image comprend :
une obtention d'une luminosité moyenne des troisièmes données d'image.

5. Procédé de traitement d'image selon la revendication 3 ou 4, **caractérisé en ce que** l'obtention des informations de luminosité courante sur la base des troisièmes données d'image comprend :

une obtention d'un histogramme des troisièmes données d'image ; et

l'obtention des informations de luminosité courante en fonction de l'histogramme des troisièmes données d'image.

6. Procédé de traitement d'image selon la revendication 5, **caractérisé en ce que** l'obtention d'un histogramme des troisièmes données d'image comprend :

une division d'une image correspondant aux troisièmes données d'image en m×n régions, et l'obtention des luminosités moyennes des régions, m représentant une quantité de lignes et n représentant une quantité de colonnes ;

la division uniforme des régions dans une plage allant d'une valeur minimale de luminosité prédéfinie à une valeur maximale de luminosité prédéfinie en au moins deux intervalles ;

pour chacun des intervalles, une exécution d'une sommation des luminosités moyennes des régions appartenant à l'intervalle afin d'obtenir une luminosité statistique de l'intervalle ; et

l'obtention de l'histogramme des troisièmes données d'image en fonction des intervalles et des luminosités statistiques correspondant aux intervalles.

7. Contrôleur (10), **caractérisé en ce qu'**il comprend :

au moins un processeur (11) ; et
une mémoire (12), connectée de manière communicante au moins au processeur (11), la mémoire (12) stockant des instructions exécutables par l'au moins un processeur (11), les instructions, lorsqu'elles sont exécutées par l'au moins un processeur (11), amenant l'au moins un processeur (11) à exécuter le procédé selon l'une quelconque des revendications 1 à 6.

8. Appareil d'acquisition d'image (102), **caractérisé en ce qu'**il comprend :

un dispositif de caméra (20), configuré pour acquérir une image d'une zone cible ;
le contrôleur (10) selon la revendication 7, connecté de manière communicante au dispositif de caméra (20).

9. Véhicule aérien sans pilote (UAV), **caractérisé en ce qu'**il comprend :

un corps (101) ;
un bras, connecté au corps (101) ;
un dispositif d'alimentation, disposé sur le bras ; et
l'appareil d'acquisition d'image (102) selon la revendication 8, l'appareil d'acquisition d'image (102) étant disposé sur le corps (101).

10. Support de stockage lisible par ordinateur non volatil, **caractérisé en ce que** le support de stockage lisible par ordinateur stocke des instructions exécutables par ordinateur, les instructions exécutables par ordinateur, lorsqu'elles sont exécutées par un véhicule aérien sans pilote (UAV), amenant le UAV (100) à exécuter le procédé selon l'une quelconque des revendications 1 à 6.

100

FIG. 1

| Body 101 |
| --- |

102

Controller 10

Camera apparatus 20

100

FIG. 2

Convert an original image signal obtained by a camera apparatus to a digital image signal — 101

Split the digital image signal into two paths to obtain a first-path digital image signal and a second-path digital image signal — 102

Perform image processing on the first-path digital image signal to obtain first image data and perform compression processing on the first-path image data to obtain a video file — 103

Perform image processing on the second-path digital image signal to obtain second image data and perform compression processing on the second-path image data to obtain a picture file — 104

## FIG. 3

Perform shrinking processing on the first-path digital image signal to obtain third image data, perform image processing on the third image data to obtain the first image data, and then perform compression processing on the first image data to obtain the video file — 103

## FIG. 4

| $W_{(1,1)}L_{(1,1)}$ | $W_{(1,2)}L_{(1,2)}$ | . . . | . . . | . . . | $W_{(1,n)}L_{(1,n)}$ |
|---|---|---|---|---|---|
| $W_{(2,1)}L_{(2,1)}$ | $W_{(2,2)}L_{(2,2)}$ | . . . | . . . | . . . | $W_{(2,n)}L_{(2,n)}$ |
| . . . | . . . | . . . | . . . | . . . | . . . |
| . . . | . . . | . . . | . . . | . . . | . . . |
| . . . | . . . | . . . | . . . | . . . | . . . |
| $W_{(m,1)}L_{(m,1)}$ | $W_{(m,2)}L_{(m,2)}$ | . . . | . . . | . . . | $W_{(m,n)}L_{(m,n)}$ |

## FIG. 5

FIG. 6

FIG. 7

Signal conversion module 701

Signal splitting module 702

Video file acquisition module 703

Picture file acquisition module 704

Exposure control module 705

700

# FIG. 8

Processor 11

10

Memory 12

# FIG. 9

**EP 3 893 489 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2019128768 W
- CN 2018116009767
- US 20150364158 A1
- EP 2627074 A1
- CN 101399924 A
- CN 109040840 A
- US 20130209056 A1